# EUROPEAN PATENT APPLICATION

(11) **EP 3 119 104 A1**
(43) Date of publication of application: **18.01.2017**
(21) Application number: 15760879.5
(22) Date of filing: 05.03.2015
(51) Int. Cl.: H04Q 9/00, G08C 15/00, G08C 15/06, H04M 11/00, H04W 4/04

(54) **METERING DEVICE AND COMMUNICATION CONTROL METHOD**

(30) Priority: 11.03.2014 JP 2014047519
(71) Applicant: NEC Corporation, Tokyo 108-8001 (JP)
(72) Inventor: SAIKUSA, Naoki, Tokyo 108-8001 (JP)
(74) Representative: Vossius & Partner Patentanwälte Rechtsanwälte mbB
(86) International application number: PCT/JP2015/001171
(87) International publication number: WO 2015/136893

(57) **Abstract**

A metering device (11) is configured to collect meter reading data and transmit the meter reading data to a remote system (13) through a wireless communication network (12). Further, the metering device (11) is configured to adjust a start timing of predetermined communication based on predetermined information that is received before starting the predetermined communication after restoration of power supply to the metering device (11). As a result, for example, it is possible to adjust a communication start timing of the metering device according to the situation of the occurrence of a power supply interruption or the situation at the time of a power supply restoration.

## Description

### Technical Field

The disclosure in this specification relates to a metering device that supports remote meter reading and, in particular, to communication control for a metering device performed when power supply is restored.

### Background Art

One of the major uses of smart meters is remote meter reading. Each smart meter has a function of collecting meter reading data that indicates, for example, watt-hour, gas usage, or water usage, and has a function of communicating bidirectionally with a remote system, thereby transmitting the meter reading data to the remote system. Further, for example, each smart meter receives instructions from the remote system and controls a switch or a valve in order to adjust watt-hour, gas usage, or water usage. The remote system connected to smart meters through a communication network is referred to as a "Meter Data Management System (MDMS)". The MDMS communicates bidirectionally with smart meters, analyzes meter reading data sent from these smart meters, and controls these smart meters.

Many of commercialized smart meters have a wireless communication module for communicating with an MDMS. As an example, each smart meter is equipped with a short-range wireless module such as one conforming to ZigBee (IEEE 802.15.4, IEEE 802.15.4g/e) and transmits meter reading data to the MDMS through multi-hop communication between smart meters. As another example, each smart meter includes a wide-area wireless communication module, thereby connecting to a base station in a public radio communication network and transmitting meter reading data to the MDMS through the public radio communication network. The wide-area wireless communication module included in the smart meter supports, for example, WiMAX (IEEE 802.16-2004), Mobile WiMAX (IEEE 802.16e-2005), Universal Mobile Telecommunications System (UMTS), Long Term Evolution (LTE), CDMA2000 (1xRTT, High Rate Packet Data (HRPD)), Global System for Mobile communications (GSM (Registered Trademark))/General packet radio service (GPRS), or the like.

Patent Literature 1 discloses that a smart meter calculates a waiting period by using a device ID unique to each smart meter and a random number. This waiting period means a time period that the smart meter should wait before the smart meter starts communication with a remote system after the smart meter is started up (in other words, after the power supply to the smart meter is restored). According to the technique disclosed in Patent Literature 1, it is possible to prevent congestion in a communication network which would otherwise occur due to a situation in which a number of smart meters simultaneously start communicating with a remote system after a wide-area power failure is recovered. Patent Literature 2 and Patent Literature 3 disclose control of a timing at which a communication device starts communication upon restoration of its power supply as with the technique disclosed in Patent Literature 1, though the techniques disclosed in Patent Literature 2 and 3 do not relate to smart meters.

### Citation List

### Patent Literature

Patent Literature 1: Japanese Unexamined Patent Application Publication No. 2012-150665
Patent Literature 2: Japanese Unexamined Patent Application Publication No. 2010-109866
Patent Literature 3: Japanese Unexamined Patent Application Publication No. 2009-124297

### Summary of Invention

### Technical Problem

In the technique disclosed in Patent Literature 1, a smart meter starts predetermined communication when a waiting period has elapsed after the start-up of the smart meter, irrespective of the cause of the interruption of its power supply. However, it may be inappropriate to force a smart meter to wait a waiting period irrespective of the cause of the interruption of its power supply. For example, when the interruption of the power supply to the smart meter is not caused by a wide-area power failure in the area where the smart meter is installed, waiting for the waiting period to elapse may be wasteful. This is because when no wide-area power failure has occurred, the possibility of congestion in the communication network or the remote system is likely to be low even if the smart meter starts communication immediately after its start-up. Further, it may be desirable if it is possible to force a smart meter to wait a waiting period (or the average value or the maximum value of randomly-determined waiting periods) which differs according to the cause of the interruption of the power supply to the smart meter (e.g., according to the scale of the power failure).

In view of above, one object of embodiments disclosed in this specification is to provide a metering device, a communication control method, and a program contribute to adjusting a communication start timing according to the situation of the occurrence of a power supply interruption or the situation at the time of a power supply restoration. Other objects or problems and novel features will be made apparent from the following description and the accompanying drawings.

### Solution to Problem

In an aspect, a metering device includes a meter reading unit and a wireless communication unit. The meter reading unit is configured to collect meter reading data. The wireless communication unit is configured to transmit the meter reading data to a remote system through a wireless communication network. Further, the wireless communication unit is configured to adjust a start timing of predetermined communication based on predetermined information that is received before starting the predetermined communication after restoration of power supply to the metering device.

In an aspect, a communication control method performed by a metering device includes adjusting a start timing of predetermined communication based on predetermined information that is received before starting the predetermined communication after restoration of power supply to the metering device.

In an aspect, a program includes a set of instructions (software code) which, when loaded into a computer, cause the computer to perform the above-described communication control method.

### Advantageous Effects of Invention

According to the above-described aspects, it is possible to provide a metering device, a communication control method, and a program contribute to adjusting a communication start timing according to the situation of the occurrence of a power supply interruption or the situation at the time of a power supply restoration.

### Brief Description of Drawings

Fig. 1 shows a configuration example of an Advanced Metering Infrastructure (AMI) system including smart meters according to a first embodiment;
Fig. 2 shows a configuration example of a smart meter according to the first embodiment;
Fig. 3 shows an example of a definition of a waiting period;
Fig. 4 is a flowchart showing an example of a communication control procedure at the time of restoration of power supply to a smart meter according to the first embodiment;
Fig. 5 is a flowchart showing an example of a communication control procedure at the time of restoration of power supply to a smart meter according to the first embodiment;
Fig. 6 shows a configuration example of an AMI system including smart meters according to a second embodiment;
Fig. 7 is a flowchart showing an example of a communication control procedure at the time of restoration of power supply to a smart meter according to the second embodiment;
Fig. 8 shows a configuration example of an AMI system including smart meters according to a third embodiment; and
Fig. 9 is a flowchart showing an example of a communication control procedure at the time of restoration of power supply to a smart meter according to the third embodiment.

### Description of Embodiments

Specific embodiments are described hereinafter in detail with reference to the drawings. The same or corresponding elements are denoted by the same reference symbols throughout the drawings, and repeated descriptions thereof are omitted as necessary for the sake of clarity.

### First embodiment

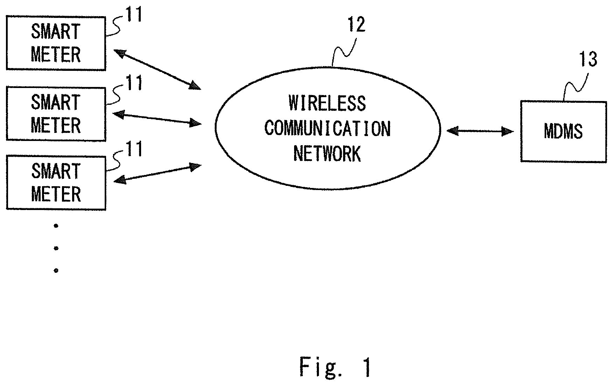

Fig. 1 shows a configuration example of an Advanced Metering Infrastructure (AMI) system including a smart meter 11 according to this embodiment. The smart meter 11 is configured to connect to a wireless communication network 12 and perform wireless communication. The smart meter 11 is further configured to communicate with a remotely located MDMS 13 through the wireless communication network 12. For example, the smart meter 11 transmits meter reading data to the MDMS 13 for remote meter reading. The meter reading data indicates, for example, watt-hour, gas usage, or water usage. The smart meter 11 may transmit meter reading data with time information for specifying its measurement period (e.g., the start time of the measurement period).

The smart meter 11 may perform other monitoring or controlling operations in cooperation with the MDMS 13. For example, the smart meter 11 may adjust the measurement period of meter reading data (e.g., 15-minute period, 30-minute period, or one-hour period) according to an instruction from the MDMS 13. Further, the smart meter 11 may transmit past meter reading data held in a memory of the smart meter 11 in response to a request from the MDMS 13. Further, the smart meter 11 may control a switch or a valve in order to adjust, for example, watt-hour, gas usage, or water usage in response to an instruction from the MDMS 13.

The wireless communication network 12 may include a public radio communication network, or a wireless multi-hop network, or both of them. The term "public radio communication network" in this specification indicates a wide-area radio infrastructure network, and means a multiple-access mobile communication system. The multiple-access mobile communication system enables mobile terminals to perform radio communication substantially simultaneously by sharing radio resources including at least one of time, frequency, and transmission power among the mobile terminals. Typical examples of multiple-access technology include Time Division Multiple Access (TDMA), Frequency Division Multiple Access (FDMA), Code Division Multiple Access (CDMA), Orthogonal Frequency Division Multiple Access (OFDMA), and any combination thereof. The public radio communication network includes a base station and a core network. The public radio communication network is, for example, WiMAX, Mobile WiMAX, UMTS, LTE, a CDMA2000 system, or a GSM/GPRS system.

In contrast to this, the wireless multi-hop network is a radio adhoc network formed by a plurality of nodes. The wireless multi-hop network uses, for example, ZigBee. When the wireless communication network 12 for smart meters 11 includes a wireless multi-hop network, this wireless multi-hop network is formed by smart meters 11 and a concentrator. That is, meter reading data originated from a smart meter arrives at the concentrator through multi-hop communications among smart meters 11 and is transferred to the MDMS 13 through the concentrator. The concentrator aggregates meter reading data transmitted from a plurality of smart meters 11 and transmits the aggregated meter reading data to the MDMS 13. The concentrator is attached to, for example, a utility pole in which a power transmission line and a transformer are installed. The communication between the concentrator and the MDMS 13 may use a wired communication network such as power line communication or use a public radio communication network.

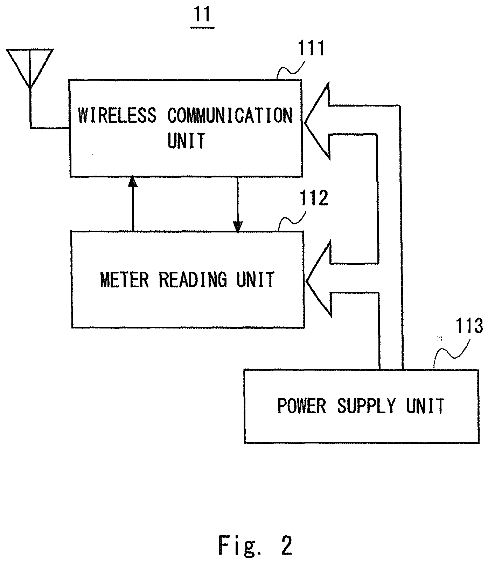

Fig. 2 is a block diagram showing a configuration example of the smart meter 11. The smart meter 11 includes a wireless communication unit 111, a meter reading unit 112, and a power supply unit 113. The wireless communication unit 111 is configured to connect to the public wireless communication network 12 and perform wireless communication. The wireless communication unit 111 may also be referred to as a wireless communication module. The wireless communication unit 111 transmits meter reading data collected by the meter reading unit 112 to the MDMS 13 through the wireless communication network 12. The meter reading unit 112 collects meter reading data for each predetermined measurement period (e.g., 15-minute period, 30-minute period, or one-hour period). The meter reading unit 112 may also perform monitoring or controlling operations (e.g., operation of a switch or a valve) in addition to the meter reading operation.

The power supply unit 113 supplies electric power to the wireless communication unit 111 and the meter reading unit 112. More specifically, the power supply unit 113 generates internal electric power from a battery (not shown) or an external power supply (not shown). The internal electric power is supplied to devices in the smart meter 11, including the wireless communication unit 111 and the meter reading unit 112. In an example, the power supply unit 113 converts alternating current (AC) power from an external power supply into direct current (DC) power and generates DC voltages suitable for the wireless communication unit 111 and the meter reading unit 112.

Next, a communication control procedure performed at the time of restoration of power supply to the smart meter 11 is described hereinafter. The smart meter 11 adjusts a start timing at which the smart meter 11 starts predetermined communication based on predetermined information that is received before starting the predetermined communication after the restoration from a power supply interruption (i.e., after a power supply restoration). Specifically, the smart meter 11 may attempt to receive the predetermined information before starting the predetermined communication after the restoration from a power supply interruption (i.e., after a power supply restoration), and adjust the start timing of the predetermined communication based on the reception of the predetermined information.

Note that the "power supply restoration" of the smart meter 11 means a change from a state in which the wireless communication unit 111 and meter reading unit 112 in the smart meter 11 cannot perform their operations (i.e., wireless communication and collecting of meter reading data) due to poor power supply to a state in which the power supply to the smart meter 11 is restored and hence the wireless communication unit 111 and the meter reading unit 112 can start their operations. Accordingly, the power supply restoration of the smart meter 11 may be defined as a situation in which sufficient electric power is supplied to the smart meter 11 (the power supply unit 113). Alternatively, the power supply restoration of the smart meter 11 may be defined as a situation in which sufficient operating power is supplied to the wireless communication unit 111 and the meter reading unit 112 in the smart meter 11. Further, to put it in other words, the power supply restoration of the smart meter 11 can be expressed as the start-up of the smart meter 11.

The "predetermined communication" includes data transmission from the smart meter 11 (the wireless communication unit 111) to the wireless communication network 12. When the wireless communication network 12 includes a public radio communication network, the predetermined communication includes, for example, at least one of communication for establishing a wireless connection with a base station, communication for establishing a connection with a core network, communication with the MDMS 13, and transmission of meter reading data. Note that the communication for establishing a wireless connection with a base station and the communication for establishing a connection with a core network are carried out when the wireless communication network 12 is a public radio communication network (i.e., a multiple-access mobile communication system). The wireless connection with a base station is a wireless connection on which the smart meter 11 can perform both uplink data transmission and downlink data reception (e.g., a Radio Resource Control (RRC) connection). The connection with a core network includes at least one of authentication of the smart meter 11 in the core network, registration of the smart meter 11 in the core network, and establishment of a communication path (bearer) for the smart meter 11. Further or alternatively, when the wireless communication network 12 includes a wireless multi-hop network, the "predetermined communication" may include communication between the MDMS 13 and the concentrator, communication between the concentrator and the MDMS 13, or both of them.

Next, the "predetermined information" is described. Firstly, a method for transmitting the predetermined information is described. The "predetermined information" may be received by the smart meter 11 through the wireless communication network 12, which is used for the transmission of meter reading data, or may be received by the smart meter 11 through a wired or wireless network other than the wireless communication network 12. As an example, when the wireless communication network 12 is a public radio communication network, the predetermined information may be transmitted from a base station. In this case, the base station may broadcast the predetermined information so as to allow the smart meter 11 to receive the predetermined information without establishing a wireless connection with the base station. For example, the predetermined information may be transmitted on a broadcast channel that can be received by a wireless terminal having no wireless connection with the base station, or may be transmitted on a radio channel that a wireless terminal can receive by referring to information received on the broadcast channel. For example, the predetermined information may be transmitted by using a Cell Broad Cast Service (CBS), an Earthquake and Tsunami Warning System (ETWS), or a mechanism similar to them. In this way, the smart meter 11 does not need to establish a connection with the base station in order to receive the predetermined information, and thus making it possible to prevent an increase in load on the base station or the wireless communication network 2 which might otherwise occur due to the reception of the predetermined information by smart meters 11.

As another example, when the wireless communication network 12 is a wireless multi-hop network, the predetermined information may be transmitted from the concentrator into the wireless multi-hop network. In this way, the smart meter 11 does not need to communicate with the MDMS 13 in order to receive the predetermined information. Therefore, it is possible to prevent an increase in load on the MDMS 13 which might otherwise occur due to the reception of the predetermined information by the smart meter 11. The concentrator may receive the predetermined information from, for example, the MDMS 13. The MDMS 13 may broadcast the predetermined information to a plurality of concentrators. Alternatively, when a public radio communication network is used for communication between the MDMS 13 and concentrators, each concentrator may receive the predetermined information from a base station in the public radio communication network.

Next, the content of the predetermined information is described. Whether or not the predetermined information has been received in the smart meter 11 may be associated with whether or not a wide-area power failure occurred in the area where the smart meter 11 is installed. The predetermined information may explicitly or implicitly indicate the occurrence of a wide-area power failure. Specifically, in an example, the smart meter 11 may recognize that a wide-area power failure occurred in the area where the smart meter 11 is installed based on whether or not the smart meter 11 has received the predetermined information, and adjust the start timing at which the smart meter 11 starts the predetermined communication according to whether a wide-area power failure occurred or not. In this way, the smart meter 11 can adjust the start timing of the predetermined communication (e.g., communication for establishing a wireless connection with a base station, communication for establishing a connection with a core network, communication with the MDMS 13, or transmission of meter reading data) according to whether a wide-area power failure occurred or not. When a wide-area power failure occurred, the smart meter 11 may preferably delay the start timing of the predetermined communication compared to when no wide-area power failure occurred. In this way, the smart meter 11 can immediately start the predetermined communication when the power supply interruption is not caused by a wide-area power failure. On the other hand, when it is presumed that the power supply interruption is caused by a wide-area power failure, the smart meter 11 can delay the start timing of the predetermined communication.

Further or alternatively, the predetermined information may contain level information associated with the scale of a power failure. In an example, the smart meter 11 may change the start timing of the predetermined communication according to the scale of a power failure indicated by the predetermined information. For example, the smart meter 11 may preferably adjust the waiting period from the power supply restoration until the start of the predetermined communication (or the average value or the maximum value of randomly-determined waiting periods), in such a manner that the larger the scale of the power failure is, the more the waiting period is increased.

Further or alternatively, the predetermined information may contain the length of the waiting period, or a specific value(s) that is used in the smart meter 11 to calculate the waiting period, such as the average value or the maximum value of randomly-determined waiting periods.

Next, a method for adjusting a start timing of predetermined communication is described. The change of the start timing of the predetermined communication may be performed by determining whether the waiting period before starting the predetermined communication after the power supply restoration is set or not. In other words, the change of the start timing of the predetermined communication may be performed by determining whether the waiting period is set to zero or to a finite value.

In another example, the start timing of the predetermined communication may be changed by changing the length of the waiting period or changing the average value or the maximum value of randomly-determined waiting periods. Note that the maximum value of waiting periods means the longest possible waiting period when the waiting period is randomly determined as shown in Patent Literature 1 to 3. The average value of randomly-determined waiting periods can be made longer (lager) by making the maximum value of waiting periods longer (larger).

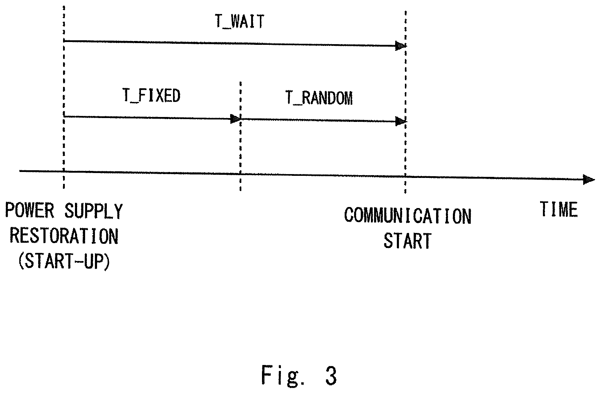

In another example, the start timing of the predetermined communication may be changed by changing the length of a fixed period (T_FIXED) or a random period (T_RANDOM) shown in Fig. 3. Fig. 3 shows an example of the definition of the waiting period (T_WAIT). In Fig. 3, the waiting period (T_WAIT) is defined as the sum of the fixed period (T_FIXED) and the random period (T_RANDOM). The fixed period (T_FIXED) is a period that the smart meter 11 has to wait. That is, the fixed period (T_FIXED) specifies the minimum time that the smart meter 11 has to wait. Therefore, the minimum time that the smart meter 11 has to wait can be changed by changing the length of the fixed period (T_FIXED). Meanwhile, the length of the random period (T_RANDOM) shown in Fig. 3 is randomly determined in a manner similar to those shown in Patent Literature 1 to 3. Therefore, as described above, the length of the random period (T_RANDOM) shown in Fig. 3 may be changed by changing its maximum value. The average value of the random period (T_RANDOM) can be made longer (lager) by making the maximum value of the random period (T_RANDOM) longer (larger).

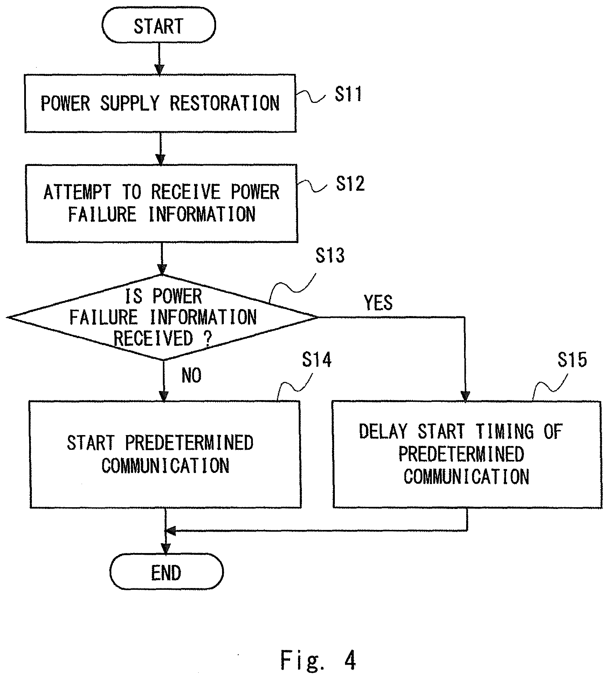

Fig. 4 is a flowchart showing an example of the communication control procedure at the time of restoration of power supply to the smart meter 11. Fig. 4 shows an example where the "predetermined information" is power failure information indicating the occurrence of a wide-area power failure. In a step S11, the power supply to the smart meter 11 is restored. That is, operating power is supplied to devices in the smart meter 11, including the wireless communication unit 111 and the meter reading unit 112, and hence these devices start up. In a step S 12, the wireless communication unit 111 attempts to receive the power failure information.

When the wireless communication unit 111 cannot receive the power failure information (No at step S13), the wireless communication unit 111 recognizes that no wide-area power failure occurred and hence starts predetermined communication (step S14). In an example, the fact that the power failure information cannot be received means that no predetermined information about a power failure has been received before a predetermined time (e.g., several seconds) has elapsed after the power supply restoration. In another example, the fact that the power failure information cannot be received means that no information about a power failure is contained in the received information. In the step S14, the predetermined communication may be started without waiting any waiting period or started after a waiting period that is on average shorter than that in the later-described step S15 has elapsed.

On the other hand, when the wireless communication unit 111 has received the power failure information (Yes at step S13), the wireless communication unit 111 recognizes the occurrence of a wide-area power failure and hence delays the timing at which the wireless communication unit 111 starts the predetermined communication (step S15). In the step S15, the predetermined communication is started after a waiting period that is on average longer than that in the step S14 has elapsed.

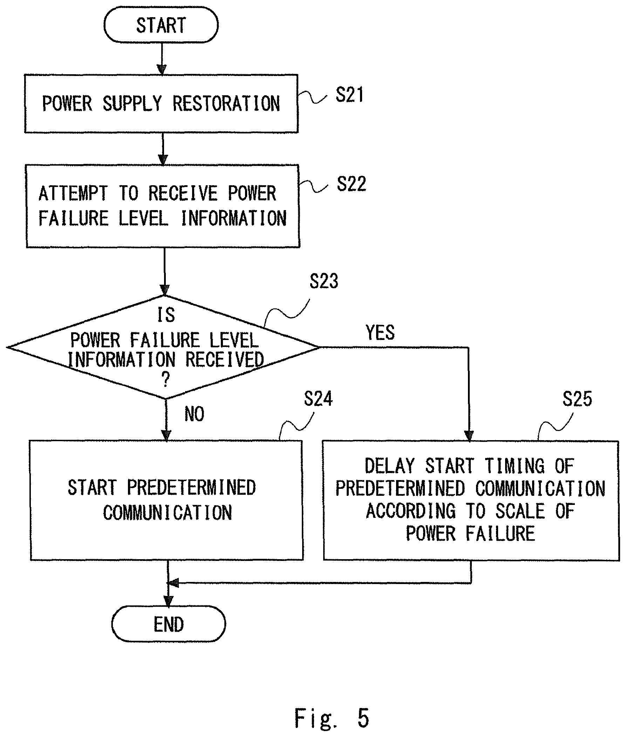

Fig. 5 is a flowchart showing another example of the communication control procedure at the time of restoration of power supply to the smart meter 11. Fig. 5 shows an example where the "predetermined information" is power failure level information indicating the scale of a wide-area power failure. In a step S21, the power supply to the smart meter 11 is restored. In a step 22, the wireless communication unit 111 attempts to receive the power failure level information.

When the wireless communication unit 111 cannot receive the power failure level information (No at step S23), the wireless communication unit 111 recognizes that no wide-area power failure has occurred and hence starts predetermined communication (step S24). In an example, the fact that the power failure information cannot be received means that no predetermined information about a power failure has been received before a predetermined time (e.g., several seconds) has elapsed after the power supply restoration. In another example, the fact that the power failure information cannot be received means that no information about a power failure is contained in received information. In the step S24, the predetermined communication may be started without waiting any waiting period or started after a waiting period that is on average shorter than that in the later-described step S25 has elapsed.

On the other hand, when the wireless communication unit 111 has received the power failure level information (Yes at step S23), the wireless communication unit 111 determines the start timing of the predetermined communication according to the scale of the wide-area power failure (step S25). For example, the wireless communication unit 111 may preferably adjust the waiting period from the power supply restoration until the start of the predetermined communication (or the average value or the maximum value of randomly-determined waiting periods), in such a manner that the larger the scale of the power failure is, the more the waiting period is increased. More specifically, the wireless communication unit 111 may preferably shorten the waiting period from the power supply restoration until the start of the predetermined communication (in particular, the average value or the maximum value of randomly-determined waiting periods) when the scale of the power failure is relatively small and increases the waiting period when the scale of the power failure is relatively large. In this way, it is possible to adjust the overall start-up times of a plurality of smart meters 11 affected by the power failure while limiting the traffic peak at the time of the power supply restoration caused by the plurality of smart meters 11.

As understood from the above explanation, the smart meter 11 according to this embodiment adjusts the start timing of the predetermined communication based on the predetermined information that is received before starting the predetermined communication after the power supply restoration. Therefore, the smart meter 11 can recognize the situation at the time of the power supply interruption or at the time of the power supply restoration, which is explicitly or implicitly indicated, based on whether or not the predetermined information can be received or based on the content of the predetermined information. Consequently, the smart meter 11 can adjust the communication start timing according to the situation at the time of the power supply interruption or at the time of the power supply restoration, which is recognized based on the predetermined information. As describe above, the predetermined information may indicate, for example, the occurrence/non-occurrence of a wide-area power failure or the scale of a power failure. According to these specific examples, the smart meter 11 can adjust the communication start timing with consideration given to the situation of the occurrence of a wide-area power failure. As an example, as described previously, when a wide-area power failure occurred, the smart meter 11 may delay the start timing of the predetermined communication compared to the start timing when no wide-area power failure has occurred. In this way, the smart meter 11 can immediately start the predetermined communication (e.g., transmission of meter reading data) when the power supply interruption is not caused by a wide-area power failure and hence reduce the delay of the predetermined communication. On the other hand, when it is presumed that the power supply interruption is caused by a wide-area power failure, the smart meter 11 can delay the start timing of the predetermined communication and hence contribute to reduction of congestion.

### Second embodiment

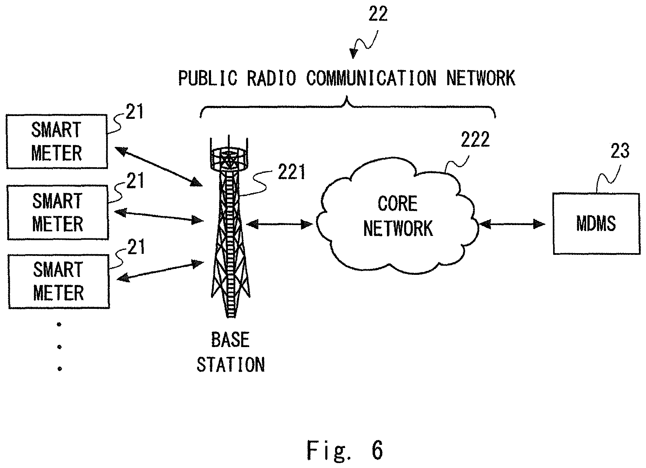

In this embodiment, a more concrete example of the first embodiment is described. Fig. 6 shows a configuration example of an Advanced Metering Infrastructure (AMI) system including a smart meter 21 according to this embodiment. This embodiment shows a case where the wireless communication network 12 according to the first embodiment is a public radio communication network (multiple-access mobile communication system) 22. That is, the smart meter 21 is configured to connect to a base station 221 in the public radio communication network 22 and perform wireless communication with the base station 221. The smart meter 21 is further configured to communicate with a remotely located MDMS 23 through the public radio communication network 22.

The base station 221 performs bidirectional communication with mobile terminals including smart meters 21 located in its coverage (i.e., cell). A core network 222 is connected to a wireless access network including the base station 221. The core network 222 has control plane functions including mobility and session management for mobile terminals (e.g., smart meters 21), and user plane functions including transfers of user data packets transmitted between mobile terminals (e.g., smart meters 21) and an external network (e.g., MDMS 23).

A configuration example of the smart meter 21 is similar to that of the smart meter 11 shown in Fig. 2. The smart meter 21 attempts to receive predetermined information transmitted from the base station 221 before starting predetermined communication (e.g., communication for establishing a wireless connection with a base station or communication for establishing a connection with a core network) after power supply restoration. Then, the smart meter 21 adjusts a start timing at which the smart meter 21 starts the predetermined communication based on the reception of the predetermined information transmitted from the base station 221.

In this embodiment, the predetermined information may preferably be broadcasted in the cell of the base station 221 so that the smart meter 21 can receive the predetermined information without establishing a wireless connection with the base station 221. For example, as described previously, the predetermined information may be transmitted on a broadcast channel that can be received by a wireless terminal having no wireless connection with the base station 221, or may be transmitted on a radio channel that a wireless terminal can receive by referring to information received on the broadcast channel. For example, the predetermined information may be transmitted by using a CBS, an ETWS, or a mechanism similar to them. In this way, the smart meter 21 does not need to establish a connection with the base station 221 in order to receive the predetermined information, thus making it possible to prevent an increase in load on the base station 221 or the core network 222due to the reception of the predetermined information by smart meters 21.

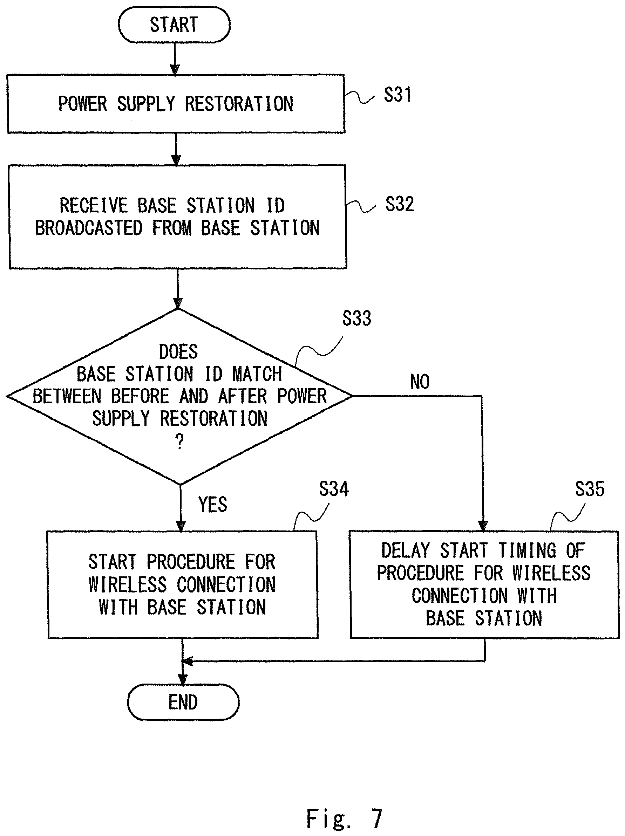

Fig. 7 is a flowchart showing an example of the communication control procedure at the time of restoration of power supply to the smart meter 21. In a step S31, the power supply to the smart meter 21 is restored. In a step S32, the smart meter 21 (the wireless communication unit) performs a cell search and receives a base station identifier (a base station ID) broadcasted from the base station 221. The base station ID is also referred to as a "cell ID". In general, the base station ID or the cell ID is broadcasted from the base station 221 so that a wireless terminal (e.g., the smart meter 21) that has not established a wireless connection with the base station 221 can identify the base station 221 or its cell. As an example, in the case of LTE, the base station ID may be a Physical Layer Identity transmitted on a Primary Synchronization Signal (PSS) or a Physical Cell Identity (PCI) transmitted on a Secondary Synchronization Signal (SSS).

In a step S33, the smart meter 21 determines whether the base station ID received after the power supply restoration matches the base station ID that was previously received immediately before the occurrence of the power supply interruption. Note that when two or more base station IDs are acquired in the cell search in the step S32, the smart meter 21 may use a base station ID contained in the signal having the best reception quality. The base station ID received before the occurrence of the power supply interruption may be stored in a nonvolatile memory (not shown) in the smart meter 21.

When the base station ID received after the power supply restoration matches the base station ID received before the power supply restoration (Yes at step S33), the smart meter 21 starts communication for establishing a wireless connection with the base station 221 (a wireless connection procedure) (step S34). In the step S34, the wireless connection procedure may be started without waiting any waiting period or started after a waiting period that is on average shorter than that in the later-described step S35 has elapsed.

On the other hand, when the base station ID received after the power supply restoration differs from the base station ID received before the power supply restoration (No at step S33), there is a possibility that the base station 221, with which the smart meter 21 was in communication before the power supply interruption, is suspending its service due to some reason (e.g., a power failure, an earthquake, a flood, a fire, or the like). Further, there are cases where the operator of the public radio communication network 22 starts operations of emergency base stations when a disaster such as an earthquake has occurred. Therefore, there is a possibility that the smart meter 21 is receiving a signal from such an emergency base station. Accordingly, in the example shown in Fig. 7, when the base station ID after the power supply restoration differs from the base station ID before the power supply restoration (No at step S33), the smart meter 21 delays the start timing of communication for establishing a wireless connection with the base station 221 (a wireless connection procedure) (step S35). This is because there is a possibility that some kind of large-scale disaster such as a wide-area power failure, a fire, or an earthquake is occurring (or occurred) in the area where the smart meter 21 is installed.

Note that Fig. 7 merely shows an example of a communication control procedure performed by the smart meter 21. For example, when a power failure has occurred and hence the base station 221 is operating by using emergency power supply, the base station 221 may transmit, as the predetermined information, information indicating that the base station 221 is performing an emergency operation. In this case, when the smart meter 21 (the wireless communication unit) detects that the base station 221 is performing the emergency operation, the smart meter 21 may delay the start timing of the predetermined communication.

### Third embodiment

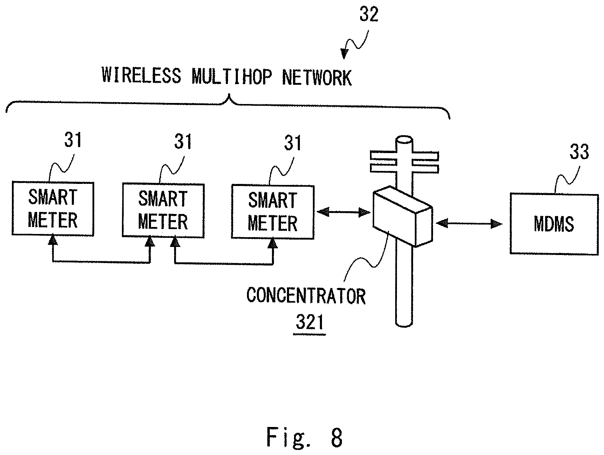

In this embodiment, a more concrete example of the first embodiment is described. Fig. 8 shows a configuration example of an Advanced Metering Infrastructure (AMI) system including a smart meter 31 according to this embodiment. This embodiment shows a case where the wireless communication network 12 according to the first embodiment is a wireless multi-hop network 32. That is, smart meters 31 and a concentrator 321 form the wireless multi-hop network 32. Each smart meter 31 communicates with a remotely located MDMS 33 through the concentrator 321 and transmits meter reading data to the MDMS 33 through the concentrator 321.

Specifically, the concentrator 321 aggregates meter reading data transmitted from a plurality of smart meters 31 and transmits the aggregated meter reading data to the MDMS 33. The concentrator 321 is attached to, for example, a utility pole in which a power transmission line and a transformer are installed. The communication between the concentrator 321 and the MDMS 13 may use a wired communication network such as power line communication or use a public radio communication network.

A configuration example of the smart meter 31 is similar to the configuration example of the smart meter 11 shown in Fig. 2. The smart meter 31 attempts to receive predetermined information transmitted from the concentrator 321 before starting predetermined communication (e.g., communication with the MDMS 33, communication with the concentrator 321, or transmission of meter reading data to the MDMS 33 or the concentrator 321) after power supply restoration. Then, the smart meter 31 adjusts a start timing at which the smart meter 31 starts the predetermined communication based on the reception of the predetermined information transmitted from the concentrator 321. Note that the concentrator 321 may receive the predetermined information from the MDMS 33. Further, when a public radio communication network is used for the communication between the MDMS 33 and the concentrator 321, the concentrator 321 may receive the predetermined information from a base station in the public radio communication network. Alternatively, the smart meter 31 may receive the predetermined information directly from the MDMS 31, rather than receiving it through the concentrator 321.

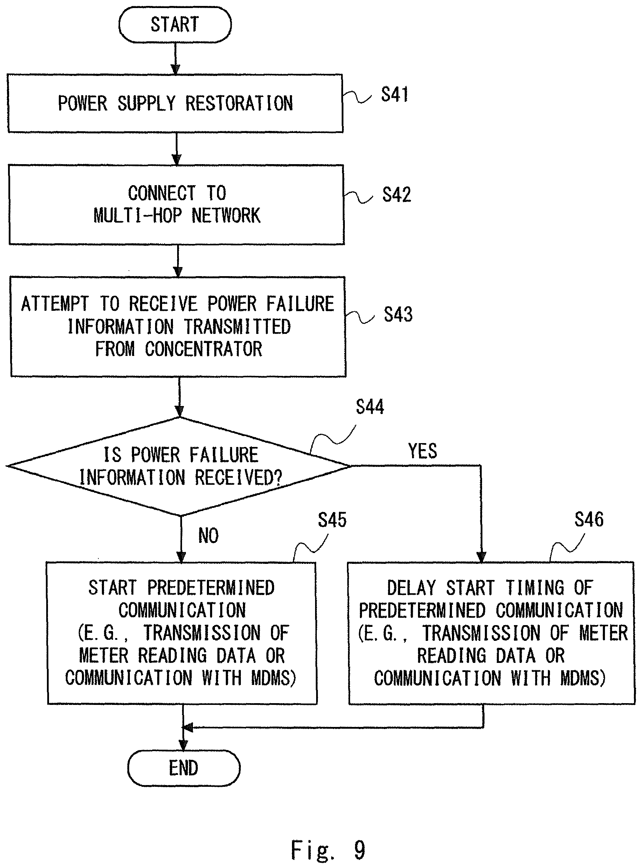

Fig. 9 is a flowchart showing an example of a communication control procedure at the time of restoration of power supply to the smart meter 31. In a step S41, the power supply to the smart meter 31 is restored. In a step S42, the smart meter 31 connects to the wireless multi-hop network 32. In a step S43, the smart meter 31 attempts to receive power failure information transmitted from the concentrator 321.

When the smart meter 31 cannot receive the power failure information (No at step S44), the smart meter 31 recognizes that no wide-area power failure has occurred and hence starts communication with the MDMS 33 (or transmission of meter reading data) (step S45). In an example, the fact that the power failure information cannot be received means that no predetermined information about a power failure has been received before a predetermined time (e.g., several seconds) has elapsed after the power supply restoration. In another example, the fact that the power failure information cannot be received means that no information about a power failure is contained in received information. In the step S45, the predetermined communication (e.g., communication with the MDMS 33, communication with the concentrator 321, or transmission of meter reading data to the MDMS 33 or the concentrator 321) may be started without waiting any waiting period or started after a waiting period that is on average shorter than that in the later-described step S46 has elapsed.

On the other hand, when the smart meter 31 has received the power failure information (Yes at step S44), the smart meter 31 recognizes the occurrence of the wide-area power failure and hence delays the start timing of the predetermined communication (step S46). In the step S46, the communication with the MDMS 33 (or transmission of meter reading data) is started after a waiting period that is on average longer than that in the step S45 has elapsed.

### Other embodiments

In the third embodiment, the adjustment of the timing at which the smart meter 33 starts the predetermined communication based on power failure information is described. This operation may be performed by the concentrator 321. Specifically, the concentrator 321 attempts to receive predetermined information indicating power failure information before starting predetermined communication (e.g., communication with the MDMS 33 or transmission of meter reading data to the MDMS 33) after power supply restoration. The predetermined information may be transmitted from, for example, the MDMS 33. Further, when a public radio communication network is used for the communication between the MDMS 33 and the concentrator 321, the predetermined information may be transmitted from a base station in the public radio communication network. Then, the concentrator 321 may adjust a start timing at which the concentrator 321 starts the predetermined communication based on the reception of the predetermined information. In this way, for example, even when the scale of the power failure is large, congestion in the communication between a plurality of concentrators 321 and the MDMS 33 can be reduced. Note that in this modified example, the smart meter 33 does not necessarily have to receive the predetermined information and the concentrator 321 does not necessarily have to transmit the predetermined information to the smart meter 33.

In the first to third embodiments, the waiting period from the power supply restoration until the start of the predetermined communication (or the average value or the maximum value of randomly-determined waiting periods) may be determined according to the priority of the smart meter 11, 21 or 31 (e.g., according to whether the customer is a large-volume customer or an ordinary customer), or according to the priority of the communication content of the smart meter 11, 21 or 31 (e.g., according to whether the transmission is periodic transmission of meter reading data or transmission of control data such as terminal authentication).

The communication control procedures at the time of power supply restoration performed by the smart meters 11, 21 and 31 and the concentrator 321 described in the first to third embodiments may be implemented by causing a computer system including at least one processor to execute a program. Specifically, one or more programs containing a set of instructions for causing a computer system to perform a control algorithm described with reference to Figs. 4, 5, 7 and 9 and the like may be supplied to the computer system.

These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

Further, the above-described embodiments are merely examples for the application of the technical ideas achieved by the present inventor. That is, needless to say, the technical ideas are not limited to the above-described embodiments and the above embodiments may be modified in various ways.

This application is based upon and claims the benefit of priority from Japanese patent application No. 2014-047519, filed on March 11, 2014, the disclosure of which is incorporated herein in its entirety by reference.

### Reference Signs List

- 11, 21, 31: SMART METER
- 12: WIRELESS COMMUNICATION NETWORK
- 22: PUBLIC RADIO COMMUNICATION NETWORK
- 32: WIRELESS MULTI-HOP NETWORK
- 13, 23, 33: METER DATA MANAGEMENT SYSTEM (MDMS)
- 111: WIRELESS COMMUNICATION UNIT
- 112: METER READING UNIT
- 113: POWER SUPPLY UNIT
- 221: BASE STATION
- 222: CORE NETWORK
- 321: CONCENTRATOR

## Claims

1. A metering device comprising:
meter reading means for collecting meter reading data; and
wireless communication means for transmitting the meter reading data to a remote system through a wireless communication network, wherein
the wireless communication means adapted to adjust a start timing of predetermined communication based on predetermined information, the predetermined information being received before starting the predetermined communication after restoration of power supply to the metering device.

2. The metering device according to Claim 1, wherein the predetermined information indicates whether or not a power failure occurred in an area where the metering device is installed.

3. The metering device according to Claim 2, wherein
the predetermined information includes level information associated with a scale of the power failure, and
the wireless communication means changes the start timing of the predetermined communication according to the scale of the power failure.

4. The metering device according to any one of Claims 1 to 3,
wherein the wireless communication means receives the predetermined information without performing any transmission to the wireless communication network after the power supply restoration.

5. The metering device according to any one of Claims 1 to 4,
wherein the predetermined communication includes at least one of communication for establishing a wireless connection with a base station, communication for establishing a connection with a core network, communication with the remote system, and transmission of meter reading data.

6. The metering device according to any one of Claims 1 to 5,
wherein
the wireless communication network includes a public radio communication network, and
the predetermined information is transmitted from a base station in the public radio communication network.

7. The metering device according to Claim 6, wherein the predetermined information is information that is broadcasted in a cell of the base station so as to allow the metering device to receive the predetermined information without establishing a wireless connection with the base station.

8. The metering device according to Claim 6 or 7, wherein the predetermined communication includes at least one of communication for establishing a wireless connection with the base station and communication for establishing a connection with a core network in the public radio communication network,

9. The metering device according to any one of Claims 6 to 8,
wherein
the predetermined information is identification information of the base station, and
when the identification information received after the power supply restoration differs from identification information received before the power supply restoration, the wireless communication means delays the start timing of the predetermined communication.

10. The metering device according to any one of Claims 6 to 8,
wherein
the predetermined information indicates whether or not the base station is performing an emergency operation, and
in response to detecting that the base station is performing the emergency operation, the wireless communication means delays the start timing of the predetermined communication.

11. The metering device according to any one of Claims 1 to 5,
wherein
the wireless communication network includes a wireless multi-hop network formed by a plurality of nodes including the metering device, and
the predetermined information is transmitted from a concentrator included in the plurality of nodes.

12. The metering device according to Claim 11, wherein the predetermined communication includes at least one of communication with the remote system through the wireless multi-hop network and transmission of the meter reading data to the remote system through the wireless multi-hop network.

13. A communication control method performed by a metering device configured to transmit meter reading data to a remote system through a wireless communication network, the communication control method comprising:
adjusting a start timing of predetermined communication based on predetermined information, the predetermined information being received before starting the predetermined communication after restoration of power supply to the metering device.

14. The communication control method according to Claim 13, wherein the predetermined information indicates whether or not a power failure occurred in an area where the metering device is installed.

15. The communication control method according to Claim 14,
wherein
the predetermined information includes level information associated with a scale of the power failure, and
the adjusting comprises changing the start timing of the predetermined communication according to the scale of the power failure.

16. The communication control method according to any one of Claims 13 to 15, further comprising receiving the predetermined information without performing any transmission to the wireless communication network after the power supply restoration.

17. The communication control method according to any one of Claims 13 to 16, wherein the predetermined communication includes at least one of communication for establishing a wireless connection with a base station, communication for establishing a connection with a core network, communication with the remote system, and transmission of meter reading data.

18. The communication control method according to any one of Claims 13 to 17, wherein
the wireless communication network includes a public radio communication network, and
the predetermined information is transmitted from a base station in the public radio communication network.

19. The communication control method according to Claim 18, wherein the predetermined information is information that is broadcasted in a cell of the base station so as to allow the metering device to receive the predetermined information without establishing a wireless connection with the base station.

20. The communication control method according to Claim 18 or 19, wherein
the predetermined information is identification information of the base station, and
the adjusting comprises, when the identification information received after the power supply restoration differs from the identification information received before the power supply restoration, delaying the start timing of the predetermined communication.

21. The communication control method according to Claim 18 or 19, wherein
the predetermined information indicates whether or not the base station is performing an emergency operation, and
the adjusting comprises, in response to detecting that the base station is performing the emergency operation, delaying the start timing of the predetermined communication.

22. The communication control method according to any one of Claims 13 to 17, wherein
the wireless communication network includes a wireless multi-hop network formed by a plurality of nodes including the metering device, and
the predetermined information is transmitted from a concentrator included in the plurality of nodes.

23. A non-transitory computer readable medium storing a program for causing a computer to perform a communication control method according to any one of Claims 13 to 22.
